(19)

Europäisches
Patentamt
European
Patent Office
Office européen
des brevets

(11)  **EP 2 185 754 B1**

(12)  # EUROPEAN PATENT SPECIFICATION

(45) Date of publication and mention
of the grant of the patent:
**06.06.2012   Bulletin 2012/23**

(21) Application number: **08829456.6**

(22) Date of filing: **08.09.2008**

(51) Int Cl.:
*D01F 2/00* (2006.01)      *D02G 3/48* (2006.01)

(86) International application number:
**PCT/KR2008/005289**

(87) International publication number:
**WO 2009/031868 (12.03.2009 Gazette 2009/11)**

(54) **LYOCELL FILAMENT FIBER AND CELLULOSE BASED TIRE CORD**

LYOCELL-FADENFASER UND REIFENCORD AUF CELLULOSEBASIS

FIBRES FILAMENTS DE FIBRES LYOCELL ET CÂBLE POUR PNEU À BASE DE CELLULOSE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **07.09.2007   KR 20070090766
07.09.2007   KR 20070090767
08.09.2008   KR 20080088078
08.09.2008   KR 20080088079**

(43) Date of publication of application:
**19.05.2010   Bulletin 2010/20**

(73) Proprietor: **Kolon Industries, Inc.
Kyungki-do 427-709 (KR)**

(72) Inventors:
• **KIM, Gi-Woong
Daegu 706-010 (KR)**
• **KWON, So-Yeon
Busan 616-112 (KR)**
• **JEON, Ok-Hwa
Gyeongsangbuk-do 712-903 (KR)**
• **OH, Young-Se
Busan 616-120 (KR)**
• **JEONG, Jong-Cheol
Seoul 120-103 (KR)**

• **KIM, Woo-Chul
Gumi City
Gyeongsangbuk-do, 730-799 (KR)**
• **CHUNG, Il
Goomi-shi
Gyeongsangbuk-do 730-030 (KR)**
• **LEE, Jae-Woong
Daegu
701-812 (KR)**

(74) Representative: **Merkle, Gebhard
TER MEER STEINMEISTER & PARTNER GbR,
Patentanwälte
Mauerkircherstrasse 45
81679 München (DE)**

(56) References cited:
**EP-A1- 1 500 724      WO-A1-02/18682
WO-A1-2006/071101      KR-A- 20050 012 446
KR-A- 20060 035 265      KR-B1- 100 674 670
KR-B1- 100 721 443**

• **KREZE T ET AL: "STRUCTURAL
CHARACTERISTICS OF NEW AND
CONVENTIONAL REGENERATED CELLULOSIC
FIBERS" TEXTILE RESEARCH JOURNAL, SAGE
PUBLICATIONS, LONDON, GB, vol. 73, no. 8, 1
August 2003 (2003-08-01) , pages 675-684,
XP001169866 ISSN: 0040-5175**

EP 2 185 754 B1

**Description**

## BACKGROUND OF THE INVENTION

**(a) Field of the Invention**

The present invention relates to lyocell filament fibers for rubber reinforcements and a cellulose-based tire cord.

**(b) Description of the Related Art**

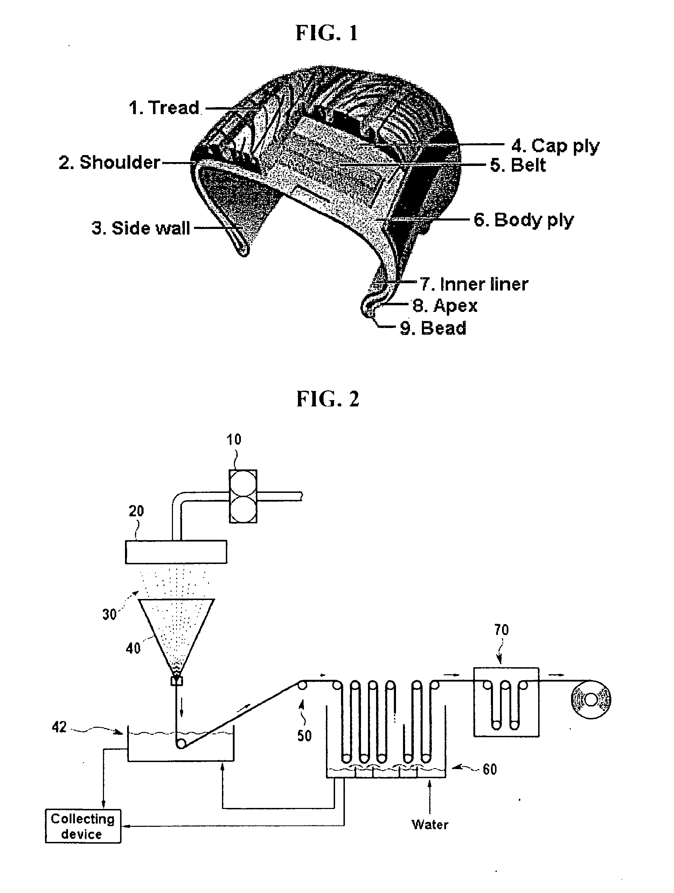

A tire is a complex body of fiber/steel/rubber, and generally has a structure as illustrated in Fig. 1. Namely, the steel and the fiber cord take a role of reinforcing the rubber and form a basic skeletal structure in the tire. It is, so to speak, like the role of bones in a human body.

As a reinforcement of the tire, the cord requires performances such as fatigue resistance, shear tenacity, durability, repelling elasticity, adhesive power to a rubber, and the like. Therefore, various cords made of suitable materials are used according to the performances required to the tire.

Recently, rayon, nylon, polyester, steel, aramid, and the like have been generally used as materials for a cord, rayon and polyester have been used for a body ply (or a carcass) (**6** in Fig. 1), nylon has been mainly used for a cap ply (**4** in Fig. 1), and steel and aramid have been mainly used for a tire-belt part (**5** in Fig. 1).

The structure and the characteristics of the tire represented in Fig. 1 are briefly disclosed hereinafter.

Tread **1**: A part contacting to the road surface; this part must provide a friction force necessary for braking and driving, be good in abrasion resistance, and also be able to withstand external shock, and its heat generation must be small.

Body ply (or Carcass) 6: A cord layer inside the tire; this part must support a load and withstand shock, and its fatigue resistance against bending and stretching movement during driving must be good.

Belt **5**: This part is located between the body plies and is mostly composed of steel wire, and it lessens the external shock and also makes the ground contacting surface of the tread wide and the driving stability good.

Side wall **3**: A rubber layer between the lower part of the shoulder **2** and the bead **9**; it takes a role of protecting the internal body ply **6**.

Bead **9**: A square or hexagonal wire bundle, wherein a rubber is coated on the steel wires; it takes a role of fitting and fixing the tire to a rim.

Inner liner **7**: A part located inside the tire instead of a tube; it makes a pneumatic tire possible by preventing air leakage.

Cap ply **4**: A special cord fabric located on the belt of a radial tire for some passenger cars; it minimizes movement of the belt during driving.

Apex **8**: A triangular rubber packing material used for minimizing the dispersion of the bead, protecting the bead by relieving external shock, and preventing air inflow during shaping.

Generally, nylon, polyester, rayon, and the like are use as materials for a tire cord. The rating and the use of the tire are limited according to the merits and demerits of the materials.

Nylon fiber is mainly used in tires for heavy-duty trucks that are subjected to heavy weight loads, or in tires mainly used on irregular surfaces such as unpaved roads, because it has high tensile elongation and tenacity. However, the nylon fiber is unsuitable for a passenger car requiring high speed driving and riding comfort, because it generates intensive heat accumulation inside of the tire, and has low modulus.

Polyester fiber has good dimensional stability and a competitive price in comparison with the nylon, its tenacity and adhesive strength are being improved by continuous studies, and the amount used in the field of tire cords is tending to increase. However, it is unsuitable for a tire for high speed driving, because there are still limitations in heat resistance, adhesive strength, and so on.

Rayon fiber, a regenerated cellulose fiber, shows a superior strength maintaining rate and dimensional stability at high temperatures. Therefore, the rayon fiber is known as the most suitable material for a tire cord. However, it requires substantial moisture control when preparing the tire, because the strength is severely deteriorated by moisture and the rate of inferior goods is high due to the heterogeneity during preparation of the fiber. First of all, its performance by price (strength by price) is very low in comparison with the other materials, and thus it is only applied to an ultra high speed driving tire or a high-priced tire.

Furthermore, a fatigue resistance of general lyocell fibers is low because of their stiff structure and low elongation, and thus their dimensional stability is inferior during high speed driving of a tire, and the development for improving the problem is needed.

EP 1 500 724 A1 discloses a high tenacity, high modulus and low shrinkage lyocell multifilament yarn suitable for use in tire cords and mechanical rubber goods which is produced by dissolving pulp having a degree polymerization of 700-2,000 and a alpha-cellulose content of more than 90 % in N-methylmorpholine N-oxide (NMMO) hydrate, at a pulp concentration of 5-15 % by weight.

Kreze T et al, Structural characteristics of new and conventional regenerated cellulosic fibers, Textile Research Journal, Sage Publications, London, GB, Vol. 73, No. 8, 1 August 2003, Pages 675-684 discloses a systematic analysis of structural characteristics and the influence on fiber properties showing that lyocell fibers consist of longer molecules having a greater degree of crystallinity and that their slighter but rather longer crystallites are oriented in the fiber axis direction while their void structure is similar to that of viscose fibers.

WO 02/18682 A1 discloses a method for producing cellulose fibers and cellulose filament yarns with improved properties on the basis of cellulose according to a dry-wet spinning method using aqueous aminoxides, especially N-methyl-morpholino-N-oxide as a solvent.

## SUMMARY OF THE INVENTION

An aspect of the present invention is to provide lyocell filament fibers those are superior in dimensional stability and suitable for a high speed driving tire.

Another aspect of the present invention is to provide a tire cord that is prepared by using the lyocell filament fibers.

Still another aspect of the present invention is to provide a cellulose based tire cord that is superior in dimensional stability.

The first embodiment of the present invention provides lyocell filament fibers of which a swelling anisotropy defined by the following Calculation Formula 1 is 1.1 to 1.4:

$$[\text{Calculation Formula 1}]$$

$$\text{Swelling anisotropy (KF)} = S_{dF}/S_{lF}$$

wherein

$S_{dF}$ is a diameter swelling factor defined by a ratio of a fiber diameter at 25°C, 95%RH to a fiber diameter at 25°C, 65%RH, and

$S_{lF}$ is a length swelling factor defined by a ratio of a fiber length at 25°C, 95%RH to a fiber length at 25°C, 65%RH.

Furthermore, the present invention provides a tire cord including the lyocell filament fibers.

The second embodiment of the present invention provides a cellulose based tire cord of which a swelling anisotropy defined by the following Calculation Formula 4 is 1.1 to 1.4:

$$[\text{Calculation Formula 4}]$$

$$\text{Swelling anisotropy (KC)} = S_{dC}/S_{lC}$$

wherein

$S_{dC}$ is a diameter swelling factor defined by a ratio of a fiber diameter at 25°C, 95%RH to a fiber diameter at 25°C, 65%RH, and

$S_{lC}$ is a length swelling factor defined by a ratio of a fiber length at 25°C, 95%RH to a fiber length at 25°C, 65%RH.

## BRIEF DESCRIPTION OF THE DRAWINGS

Fig. 1 is a partial cut-away perspective view illustrating a structure of a general tire.

Fig. 2 is a constructive drawing representing the spinning device for preparing the lyocell filament fibers according to one embodiment of the present invention.

Fig. 3 is an enlarged constructive drawing of a washing device of the spinning device of Fig. 2.

<Explanations for signs of the principal parts of the drawings>

10: gear pump
20: spinning die          30: non-coagulated fiber
40: first coagulating bath   42: second coagulating bath

(continued)

50: pulling part        60: washing device
70: drying device

## DETAILED DESCRIPTION OF THE EMBODIMENTS

Hereinafter, the present invention is explained in more detail.

In the present invention, the filament bundle including a plurality of filament fibers is called "multi-filaments", the raw cord prepared by Z twisting (counter-clockwise twisting) and S twisting (clockwise twisting) (or S twisting and Z twisting) the multi-filaments is called "twisted yarn", and the dipped cord prepared by treating the twisted yarn with an adhesive for a tire cord is called "tire cord" or "cord".

The lyocell filament fibers (the lyocell multi-filaments) according to the first embodiment that the present invention intends to develop have a good property maintaining rate in spite of the change of relative humidity at room temperature, and thus have the most suitable properties to be used for a tire cord.

Therefore, the present invention can resolve the problems of usual decrease of strength due to moisture and the decrease of dimensional stability at severe conditions during high speed driving of the tire according to the highly humid state.

The lyocell filament fibers according to the present invention are characterized by that the swelling anisotropy defined by the following Calculation Formula 1 is 1.1 to 1.4, and the swelling anisotropy may be 1.1 to 1.3:

$$[\text{Calculation Formula 1}]$$

$$\text{Swelling anisotropy (KF)} = S_{dF}/S_{lF}$$

wherein
$S_{dF}$ is a diameter swelling factor defined by a ratio of a fiber diameter at 25 °C , 95%RH to a fiber diameter at 25 °C, 65%RH, and
$S_{lF}$ is a length swelling factor defined by a ratio of a fiber length at 25°C, 95%RH to a fiber length at 25°C, 65%RH.

At this time, when the swelling anisotropy is less than 1.1, the orientation property is low and the structure is not dense, and when the swelling anisotropy is larger than 1.4, the strength may decrease by repeated fatigue because of their low breaking elongation.

Furthermore, an initial modulus maintaining rate of the lyocell filament fibers defined by the following Calculation Formula 2 is 90% or more:

$$[\text{Calculation Formula 2}]$$

$$\text{Initial modulus maintaining rate (MF)} = M_{2F}/M_{1F} \times 100$$

wherein
$M_{1F}$ is an initial modulus measured at 25 C, 65%RH, and
$M_{2F}$ is an initial modulus measured at 25 °C, 95%RH.

Furthermore, a strength maintaining rate of the lyocell filament fibers defined by the following Calculation Formula 3 is 90% or more:

$$[\text{Calculation Formula 3}]$$

$$\text{Strength maintaining rate (SF)} = S_{2F}/S_{1F} \times 100$$

wherein
$S_{1F}$ is a strength measured at 25 °C, 65%RH, and
$S_{2F}$ is a strength measured at 25°C, 95%RH.

Furthermore, an elongation change rate of the lyocell filament fibers is 100% to 130%, and preferably 100% to 110%.

In the present invention, "initial modulus range" means the average slope between the strains of 0% and 5% in the stress-strain curve of the fibers.

Furthermore, in the tire cord, as the modulus changes less in the initial modulus range at high temperature condition, the stress of the fibers according to the external stress changes less, and accordingly the dimensional stability becomes good and thus the characteristics of the tire cord that is capable of high speed driving can be obtained.

Therefore, the lyocell filament fibers can be made into the tire cord that is superior in dimensional stability by minimizing the change of modulus in the initial modulus range even in a highly humid condition.

In the present invention, the lyocell filament fibers may be prepared by the preparing method including the steps of preparing a lyocell spinning dope by dissolving the cellulose into a solvent mixture of N-methylmorpholine-N-oxide (NMMO) and water, spinning and preparing filaments from the spinning dope by using a spinning device equipped with spinning nozzles, coagulating the filaments, washing the coagulated filaments with a washing liquid, drying the washed filaments, and winding the filaments.

Furthermore, the filament fibers may show the above-described properties even after highly humid treating, because the present invention prepares the lyocell filament fibers by using the spinning device illustrated in Fig. 2.

Hereinafter, the method of preparing the lyocell filament fibers according to one embodiment of the present invention is explained by referring to the attached drawings, so as to enable a person with ordinary skill in the art to which the present invention pertains to easily carry it out.

At this time, the method of preparing the lyocell filament fibers of the present invention is not limited to or by the following preferable embodiments, and it is understandable to a person skilled in the related art that various modifications and parities are possible from the present embodiment

Therefore, the scope of the right of the present invention is not limited to or by the embodiments, and it is also included in the scope of the right of the present invention that a person in the related art can carry out various modifications and reforms by using the basic concept defined in the present claims.

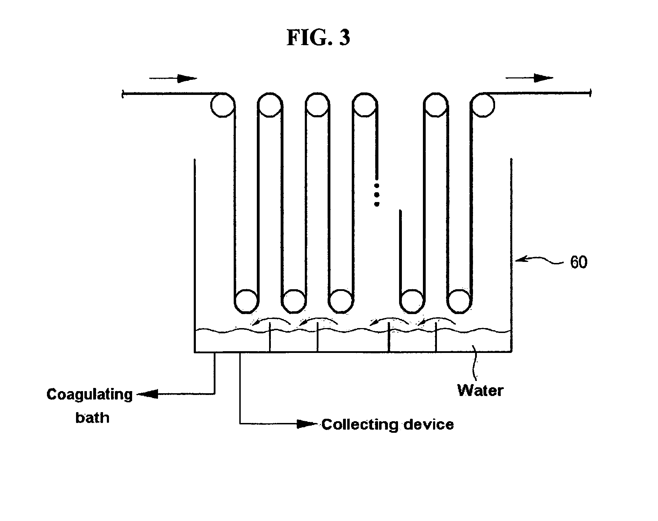

Fig. 2 is a constructive drawing representing the components according to one embodiment of the spinning device used for preparing the lyocell filament fibers of the present invention, and Fig. 3 is an enlarged constructive drawing of a washing device of the spinning device of Fig. 2.

Referring to the components of Fig. 2, the device for preparing the lyocell filament fibers is equipped with a gear pump **10** for providing a spinning dope with a regular pressure, a spinning die **20** for spinning the dope provided by extruding with the pump into a form of fiber, and a first coagulating bath **40** and a second coagulating bath **42** for coagulating the non-coagulated fibers **30** discharged from the spinning die. The filaments having passed through the first coagulating bath **40** are passed through the second coagulating bath **42** by the driving force of a pulling roller **50,** and the solvent included in the spinning dope is eliminated in a washing device **60** with water. Subsequently, the filaments passed through the washing device are dried in a drying device **70** and then final lyocell filaments can be obtained by winding them on a winding roll.

That is, the cellulose sheets may be made into powders by introducing the same into a pulverizer equipped with a screen filter, which is not illustrated in the Figs., the powders are stored in a storage tank, and subsequently a mixture of the cellulose powders and a liquid spinning solution may be introduced into a feeding part of a twin extruder. At this time NMMO may be used as the liquid spinning solution.

After this, the mixture is made into a homogeneous solution by passing a mixing part and a dissolving part, and the solution is spun into the vertical coagulating baths **40, 42** through a spinning pack equipped with spinning nozzles. N-methylmorpholine-N-oxide (NMMO) is eliminated from the filaments coagulated in the vertical coagulating baths **40, 42** by NMMO-free water in the washing device **60**.

Subsequently, the filaments passed through the washing device **60** are dried at the drying device **70** and the final multi-filaments, that is, the multi-filaments, can be obtained by winding the same.

At this time, the detailed components of the washing device of the present invention are like as illustrated in Fig. 3. The washing device **60** of the present invention is composed of the upper and lower horizontal rollers and the washing liquid receiver located under the lower horizontal roller, and they constitute a washing step. A multi-step washing device composed of a plurality of the washing steps can be used in the present invention, and the washing device composed of 3 to 10 washing steps can be used. The time that the filaments pass through the washing device relates to the spinning speed, and the time may be 30 seconds to 90 seconds.

Furthermore, according to the present invention, NMMO-free water is introduced at the final washing step, and the water is sprayed to the multi-filaments passing through the rollers in order to eliminate the NMMO included in the filaments, and introduced into just prior washing step in order to eliminate the NMMO included in the passing filaments in the same manner as in the final washing step, and transferred to the second prior washing from the final washing step. However, the washing process is not limited to the spray method, and the method of dipping the multi-filaments passing through the rollers into the washing liquid included in a washing bath is also possible, and all methods related to washing can also be applied.

According to the successive operations, the washing liquid collected in the first washing step includes a great deal of NMMO and the liquid is transferred to the coagulating bath or the collecting device and the NMMO is recycled.

The NMMO content of the washing liquid collected in the first washing step changes according to the amount of water introduced in the final washing step, and it influences the properties of the prepared fibers in the event.

In the present invention, the content of the NMMO collected in the first washing step is controlled to be 3 to 25 wt%.

Furthermore, the concentration of the NMMO at the final washing step of the washing device may be 200 ppm or less.

The raw lyocell fibers obtained like this may be dried at the drying device 70 in the temperature range of 100°C to 200 °C. The range of the tension in the drying step of the multi-filaments can be selected arbitrarily under necessity, and the conditions are not particularly limited.

Furthermore, in the preparing method of the present invention, it is preferable to use a spinning dope in which 7 to 18 wt% of the cellulose is dissolved in the solvent mixture containing NMMO and water in a weight ratio of 93:7 to 85:15, and the spinning dope may be prepared by swelling the cellulose in the solvent mixture containing NMMO and water in a weight ratio of 90:10 to 50:50 and then eliminating water so that the weight ratio of NMMO and water is 93:7 to 85:15 and the final content of the cellulose is 5 to 35 wt%, and preferably 7 to 18 wt%. However, the ratio of the solvent mixture and the content of the cellulose are only selected for the most suitable condition to prepare the cellulose-based filaments, and the present invention is not limited to or by them.

Furthermore, the present invention provides a tire cord including the lyocell filament fibers.

The tire cord of the present invention can be prepared by twisting the prepared lyocell multi-filaments, treating the same with an adhesive solution for a tire cord according to a conventional dipping method, and drying and heat-treating the same.

Furthermore, the shape of the lyocell tire cord of the present invention may be equal to that of a common industrial tire cord, and is not particularly limited. However, the lyocell tire cord may use the twisted yarn of 2 to 3 ply, of which the total number of filaments is 400 to 6000, the total fineness is 444 - 10'000 dtex (400 to 9000 denier), and the twisting level is 200 to 600 TPM, in order to represent suitable properties as a tire cord.

A conventional adhesive solution for a tire cord may be used as the adhesive solution adhered to the lyocell filament fibers of the present invention, and preferably a resorcinol-formaldehyde-latex (RFL) adhesive solution may be used. The drying temperature and the heat-treating conditions of the adhesive solution are in accordance with conventional process conditions.

The twisted yarn passed through the adhesive solution is prepared into a tire cord by undergoing the drying process and the heat-treating process. Furthermore, the drying process may be carried out at 105 to 160°C while applying a tension of 0,196 - 19,6 N/cord (20 to 2000 g/cord) for 1 to 10 minutes. When drying the cord while applying the tension of the above condition in the temperature range, it is possible to delay the penetrating speed of the adhesive because of the rapid drying of the adhesive solution, and the advantageous properties for showing the strength can be obtained by minimizing the damage of the dried cord.

Furthermore, the heat-treating process may be carried out at 105 to 220°C , or 150 to 220 °C, while applying the tension of 0,196 - 19,6 N/cord (20 to 2000 g/cord) for 1 to 10 minutes. When heat-treating the cord while applying the tension of the above condition in the temperature range, it is possible to raise the adhesive power while decreasing the damage of the cord by promoting the reaction between the lyocell twisted yarn and the adhesive.

The moisture included in the lyocell cord is dried at the drying process, and the heat-treating process gives adhesive power to the tire cord by making the dipping solution react.

The lyocell filament fibers according to the first embodiment of the present invention are superior in property maintaining rates, such as the swelling anisotropy according to the change of the relative humidity at room temperature, the initial modulus maintaining rate, the elongation maintaining rate, and so on, and the dimensional stability is good, and thus the property maintaining rate at the post manufacturing process and the processibility are good.

The cellulose based tire cord according to the second embodiment that the present invention intends to develop has the most suitable properties so that the property maintaining rate is good in spite of a change of the relative humidity at room temperature.

Therefore, the present invention can resolve the problems of a usual decrease of strength due to moisture and the decrease of dimensional stability under severe conditions during high speed driving of the tire according to the highly humid state, the same in the lyocell filament fibers.

The cellulose based tire cord according to the present invention is characterized by the swelling anisotropy being defined by the following Calculation Formula 4 is 1.1 to 1.4, and the swelling anisotropy may be 1.1 to 1.3:

[Calculation Formula 4]

$$\text{Swelling anisotropy (KC)} = S_{dC}/S_{lC}$$

wherein

$S_{dC}$ is a diameter swelling factor defined by a ratio of a fiber diameter at 25°C, 95%RH to a fiber diameter at 25°C, 65%RH, and

$S_{IC}$ is a length swelling factor defined by a ratio of a fiber length at 25 °C, 95%RH to a fiber length at 25 °C, 65%RH.

At this time, when the swelling anisotropy is less than 1.1, the orientation property is low and the structure is not dense, and when the swelling anisotropy is larger than 1.4, the strength may decrease by repeated fatigue because of its low breaking elongation.

Furthermore, an initial modulus maintaining rate of the cellulose based tire cord defined by the following Calculation Formula 5 is 80% or more, and may be 90% or more:

$$[\text{Calculation Formula 5}]$$

$$\text{Initial modulus maintaining rate (MC)} = M_{2C}/M_{IC} \times 100$$

wherein

$M_{1C}$ is an initial modulus measured at 25 °C, 65%RH, and

$M_{2C}$ is an initial modulus measured at 25 °C, 95%RH.

Furthermore, a strength maintaining rate of the cellulose based tire cord defined by the following Calculation Formula 6 is 90% or more:

$$[\text{Calculation Formula 6}]$$

$$\text{Strength maintaining rate (SC)} = S_{2C}/S_{1C} \times 100$$

wherein

$S_{1C}$ is a strength measured at 25 °C, 65%RH, and

$S_{2C}$ is a strength measured at 25°C, 95%RH.

Furthermore, an elongation change rate of the cellulose based tire cord is 100% to 130%, and preferably 100% to 110%.

In the tire cord, as the modulus changes less in the initial modulus range at high temperature condition, the stress of the fibers according to the external stress changes less, and accordingly the dimensional stability becomes good, and the characteristics of the tire cord that is capable of high driving can be obtained. The "initial modulus range" is the same as defined above.

Therefore, the cellulose based tire cord having the properties is also superior in the dimensional stability by minimizing the change of modulus in the initial modulus range even in a highly humid condition.

The method of preparing the cellulose based tire cord can be carried out according to the same method of the above method of preparing the tire cord including the lyocell filament fibers by using cellulose based fibers. For example, the tire cord can be prepared by using the lyocell filament fibers according to the first embodiment.

The kind of the cellulose based fibers is not particularly limited, and it may be a cellulose twisted yarn including lyocell filament fibers, rayon filament fibers, or a mixture thereof. The method of preparing the cellulose based fibers is the same as the above mentioned method, and includes the method using the device of Figs. 2 and 3.

Furthermore, the shape of the cellulose based tire cord of the present invention is also not particularly limited. However, the tire cord may use the twisted yarn of 2 to 3 ply, of which the total number of filaments is 400 to 6000, the total fineness is 444- 10'000 dtex (400 to 9000 denier), and the twisting level is 200 to 600 TPM, in order to represent suitable properties as a cellulose based tire cord.

In addition, the method of treating the adhesive solution and the method of drying and heat-treating are also the same as the above-mentioned methods.

The cellulose based tire cord according to the second embodiment of the present invention is superior in the initial modulus maintaining rate, and the dimensional stability is good, and thus the property maintaining rate at the post manufacturing process and the processibility are good.

Details except what is disclosed above can be added and under necessity, and the present invention is not specifically limited.

Hereinafter, the present invention is described in further detail through examples. However, the following examples are only for the understanding of the present invention and the present invention is not limited to or by them.

**Comparative Example 1**

Rayon fibers (Supper III, a product of CORDENKA Co.), of which the total fineness was 1833 dtex (1650 denier), were used.

Reference Example 1 and Example 2

The lyocell filament fibers were prepared by using the spinning device of Fig. 2.

Firstly, a cellulose (the content of alpha-cellulose is 96% or more; V-81, buckeye Ltd.) sheet was prepared into powders by introducing the same into a pulverizer equipped with a screen filter and the powders were stored in a pulp powder storage tank, and subsequently the cellulose powders (feeding speed = 561 g/h) and a liquefied NMMO (89 °C, water content = 13%, feeding speed = 6,000 g/h) were introduced into a feeding part of a twin extruder (diameter of screw (D) = 48 mm, L/D = 52) of which the rotating speed of the screw was 120 rpm and the temperature was 80 °C .

The mixture was made into a homogeneous solution by passing a mixing part and a dissolving part, and subsequently the solution was spun into a vertical coagulating baths 40, 42 through a spinning pack equipped with spinning nozzles (diameter of 0.2 mm, 1000 orifices). The NMMO was eliminated from the filaments coagulated in the vertical coagulating baths with the NMMO-free water at a washing device 60, wherein the washing device 60 was composed of the upper and lower horizontal rollers and the washing liquid receiver located under the lower horizontal roller as illustrated in Figs. 2 and 3, and the washing device composed of 10 washing steps was used in the present invention.

In the present example, the amount of water introduced was controlled so that the content of the NMMO of the washing liquid collected in the first washing step was 3 wt% or 25 wt% (successively Reference Example 1 and Example 2), and the lyocell filaments having the total 1833 dtex (denier of 1650) were obtained by drying at a drying device 70 and winding the same.

**Experimental Example 1**

The rayon fibers of 1833 dtex (1650 denier) obtained in Comparative Example 1 and the lyocell filaments obtained in Reference Example 1 and Example 2 were chosen and stored in the standard condition (25 °C, 65%RH) according to the Korean Industrial Standard KSK 0901 for 24 hours or more so as to be in a state of moisture equilibrium, and then the specimens were dried at 105°C for 2 hours.

The strength, the elongation, and the modulus of the dried specimens were measured according to the KSK 0412 standard by using a low speed extension type of tensile tester of Instron Co., wherein the length of the specimens were 250 mm and the extension speed was 300 mm/min, and the results are listed in Table 1.

Furthermore, the fibers obtained in Comparative Example 1 and Reference Example 1 and Example 2 were chosen and stored in the conditions of 25 °C, 95%RH, and 1 atm for 24 hours or more so as to be in a state of moisture equilibrium, and the specimens were dried at 105°C for 2 hours, and then the strength, the elongation, and the modulus of the dried specimens were measured the same as in the above method, and the results are listed in Table 1.

**Method of measuring the swelling anisotropy (KF) of the filaments**

Firstly, the specimen made to be in the state of moisture equilibrium by storing the same in the conditions of 25°C, and 95%RH or 65%RH, and 1 atm for 24 hours or more was loaded to a cross-section observation kit, and its cross-section was cut by a sharp knife. And then, the cross-sections of the fibers were observed by an optical microscope (Olympus BX51) at 500X magnification and the diameters of the fibers were directly obtained by using the analySIS FIVE image program. At this time, cross-sections of 20 fibers per specimen were selected for credibility and each diameter was obtained and $S_{df}$ was obtained as their average value (Table 1).

Furthermore, the filament bundle was made to be in the state of moisture equilibrium by storing the same in the conditions of 25 °C, 65%RH, 1 atm for 24 hours or more, and then 1 m of the bundle was chosen and made to be the state of moisture equilibrium by storing the same in the conditions of 25 °C, 95%RH, 1 atm for 24 hours or more. And then $S_{1F}$ was obtained by measuring the length of the fibers. The measuring was also carried out 5 times for credibility and $S_{1F}$ was obtained as their average value. The swelling anisotropy was finally obtained from the obtained values according to the following formula and the results are listed in Table 1.

[Calculation Formula 1]

Swelling anisotropy (KF) = $S_{dF}/S_{lF}$

wherein

$S_{dF}$ is a diameter swelling factor defined by a ratio of a fiber diameter at 25°C, 95%RH to a fiber diameter at 25 °C, 65%RH, and

$S_{1F}$ is a length swelling factor defined by a ratio of a fiber length at 25°C, 95%RH to a fiber length at 25 °C, 65%RH.

[Table 1]

| | | Strength | Elongation | Modulus | Initial modulus | Elongation 1 kgf = 9.80665 N @4.5 kgf | Diameter | Length | Swelling anisotropy (KF) |
|---|---|---|---|---|---|---|---|---|---|
| | | 1 kgf = 9.80665 N kgf | % | 1 g/d = 0.89cN/ dtex g/d (1650) | 1 g/d = 0.89cN/ dtex g/d (1650) | (%) | ($\mu$m) | (mm) | |
| Comparative Example 1 | 25 °C, RH65% | 9.1 | 12.55 | 127.6 | 110.5 | 5.4 | 13 | 90 | - |
| | 25°C, RH95% | 9.1 | 15.39 | 71.5 | 87.3 | 7 | 19 | 87 | 1.42 |
| Ref. Example 1 | 25 °C, RH65% | 8.8 | 8.7 | 192.7 | 146 | 2.7 | 12 | 90 | - |
| | 25 °C, RH95% | 8 | 8.2 | 156.7 | 121.6 | 3.3 | 15 | 89.9 | 1.3 |
| Example 2 | 25 °C, RH65% | 9.3 | 6.6 | 210.5 | 155.7 | 2.3 | 13 | 90 | - |
| | 25 °C, RH95% | 8.7 | 7.4 | 174.9 | 157.3 | 3.2 | 15 | 89.9 | 1.2 |

As Shown in the results, the lyocell filament fibers of the present invention have very good swelling anisotropy of 1.2-1.3 even in a highly humid condition, and the tenacity maintaining rate and the initial modulus maintaining rate are 90% or more and thus the final properties are improved.

**Example 3**

A 2 ply rayon twisted yarn was prepared by Z twisting rayon fibers (SUPPER III, a product of CORDENKA Co.), of which the total number of filaments was 1750, with 400 TPM and then S twisting the Z twisted yarn with 400 TPM by using the Cable & Cord 3type twister, that is, a C.C. Twister, by Allma Co.
The tire cord was prepared by dipping and passing the rayon twisted yarn through a common adhesive RFL solution under the tension of 2,94 N/cord (300 g/cord), drying the same at 150 °C for 2 minutes, and then heat-treating the same at 180 °C for 3 minutes under the tension of 4,90 N/cord (500 g/cord).

**Examples 4 and 5**

2 ply lyocell twisted yarns were prepared by Z twisting the lyocell multi-filament fibers of Reference Example 1 and Example 2 with 400 TPM and then S twisting the Z twisted yarns with 400 TPM by using the Cable & Cord 3type twister, that is, a C.C. Twister, by Allma Co.
The lyocell tire cords were prepared by dipping and passing the lyocell twisted yarns through a common adhesive RFL solution under the tension of 2,94 N/cord (300 g/cord), drying the same at 150 °C for 2 minutes, and then heat-treating the same at 180 °C for 3 minutes under the tension of 4,90 N/cord (500 g/cord).

**Experimental Example 2**

The tire cords obtained in Examples 3 to 5 were chosen and stored in the standard condition (25 °C, 65%RH) according to the KSK 0901 for 24 hours or more so as to be the state of moisture equilibrium, and then the cords were dried at 105 °C and 120 °C for 2 hours.
The strength, the elongation, and the modulus of the dried specimens were measured according to the KSK 0412 standard by using a low speed extension type of tensile tester of Instron Co., wherein the length of the specimens were 250 mm and the extension speed was 300 mm/min, and the results are listed in Table 2.
Furthermore, the tire cords obtained in Examples 3 to 5 were chosen and stored in an autoclave in the conditions of 25 °C, 95%RH, 1 atm for 24 hours or more so as to be in the state of moisture equilibrium, and the specimens were dried at 105 °C for 2 hours, and then the strength, the elongation, and the modulus were measured the same as in the above method, and the results are listed in Table 2.

**Method of measuring the swelling anisotropy (KC) of the tire cords**

Firstly, the single cord made to be in the state of moisture equilibrium by storing the same in the conditions of 25°C, and 95%RH or 65%RH, and 1 atm for 24 hours or more was loaded to a cross-section observation kit, and its cross-section was cut by a sharp knife. And then, the cross-section was observed by an optical microscope (Olympus BX51) at 500X magnification and the cross-sectional area of the single cord was obtained by using analySIS FIVE image program, and the equivalent diameter ($S_{dC}$) corresponding to the cross-sectional area was obtained. At this time, the equivalent diameters of 5 cords per specimen were selected for credibility and $S_{dc}$ was obtained as their average value (Table 2).
Furthermore, the single cord was made to be in the state of moisture equilibrium by storing the same in the conditions of 25 °C, 65%RH, 1 atm for 24 hours or more, and then 1 m of the cord was chosen and made to be in the state of moisture equilibrium by storing the same in the conditions of 25 °C, 95%RH, 1 atm for 24 hours or more, and then $S_{1C}$ was obtained by measuring the length of the cord. The measuring was also carried out 5 times for credibility and $S_{1C}$ was obtained as their average value. The swelling anisotropy (KC) of the cord was finally obtained from the measured values according to the following formula, and the results are listed in Table 2.

$$[\text{Calculation Formula 4}]$$

$$\text{Swelling anisotropy (KC)} = S_{dC}/S_{1C}$$

wherein
$S_{dC}$ is a diameter swelling factor defined by a ratio of a fiber diameter at 25 °C, 95%RH to a fiber diameter at 25 °C,

65%RH, and

$S_{1C}$ is a length swelling factor defined by a ratio of a fiber length at 25 °C, 95%RH to a fiber length at 25°C, 65%RH.

[Table 2]

| | | Strength | Elongation | Modulus | Initial modulus | Elongation 1 kgf = 9.80665 N @4.5kgf | Diameter | Length | Swelling anisotropy (KC) |
|---|---|---|---|---|---|---|---|---|---|
| | | 1 kgf = 9.80665 N Kgf | % | 1 g/d = 0.89 cN/dtex g/d (1650) | 1 g/d = 0.89 cN/dtex g/d (1650) | (%) | (μm) | (mm) | |
| Example 3 | 25 °C, RH65% | 13.9 | 11.7 | 104.6 | 146.9 | 2.9 | 12 | 90 | - |
| | 25 °C, RH95% | 13 | 14 | 60.2 | 117.5 | 4.5 | 17 | 86 | 1.4 |
| Example 4 | 25 °C, RH65% | 13.7 | 9.4 | 123.7 | 141.4 | 2.2 | 12 . | 90 | - |
| | 25 °C, RH95% | 12.8 | 9.9 | 95.1 | 130.1 | 3.2 | 13 | 89.9 | 1.1 |
| Example 5 | 25 °C, RH65% | 13.2 | 11 | 125.6 | 148.1 | 3.5 | 12 | 90 | - |
| | 25°C, RH95% | 12.5 | 12.8 | 97.1 | 133.3 | 4.3 | 13 | 89.9 | 1.1 |

As Shown in the results, the cellulose-based tire cords of the present invention have very good swelling anisotropy even in a highly humid condition, and the tenacity (strength) maintaining rate and the initial modulus maintaining rate are 80% or more and thus the final properties are also good.

The lyocell filament fibers of the present invention deform less and can exhibit stable high driving performance when they are applied to a tire cord, because they have good dimensional stability in a highly humid state. The cellulose-based tire cord of the present invention can be applied to a body ply, a cap ply, and the like for a pneumatic tire.

**Claims**

1. Lyocell filament fibers, of which a swelling anisotropy defined by the following Calculation Formula 1 is 1.1 to 1.4:

$$\text{Calculation Formula 1}$$
$$\text{Swelling anisotropy (KF)} = S_{dF}/S_{lF}$$

wherein
$S_{dF}$ is a diameter swelling factor defined by a ratio of a fiber diameter at 25°C, 95%RH to a fiber diameter at 25 °C, 65%RH, and
$S_{1F}$ is a length swelling factor defined by a ratio of a fiber length at 25 °C, 95%RH to a fiber length at 25 °C, 65%RH.

2. The lyocell filament fibers according to Claim 1, wherein the swelling anisotropy is 1.1 to 1.3.

3. The lyocell filament fibers according to Claim 1, of which an initial modulus maintaining rate defined by the following Calculation Formula 2 is 90% or more:

$$\text{Calculation Formula 2}$$
$$\text{Initial modulus maintaining rate (MF)} = M_{2F}/M_{1F} \times 100$$

wherein
$M_{1F}$ is an initial modulus measured at 25 °C, 65%RH, and
$M_{2F}$ is an initial modulus measured at 25 °C, 95%RH.

4. The lyocell filament fibers according to Claim 1, of which a strength maintaining rate defined by the following Calculation Formula 3 is 90% or more:

$$\text{Calculation Formula 3}$$
$$\text{Strength maintaining rate (SF)} = S_{2F}/S_{1F} \times 100$$

wherein
$S_{1F}$ is a strength measured at 25 °C, 65%RH, and
$S_{2F}$ is a strength measured at 25 °C, 95%RH.

5. A tire cord including the lyocell filament fibers according to any one of Claims 1 to 4.

6. A cellulose based tire cord, of which swelling anisotropy defined by the following Calculation Formula 4 is 1.1 to 1.4:

$$\text{Calculation Formula 4}$$
$$\text{Swelling anisotropy (KC)} = S_{dC}/S_{lC}$$

wherein

$S_{dC}$ is a diameter swelling factor defined by a ratio of a fiber diameter at 25 °C, 95%RH to a fiber diameter at 25 °C, 65%RH, and

$S_{1C}$ is a length swelling factor defined by a ratio of a fiber length at 25°C, 95%RH to a fiber length at 25 °C, 65%RH.

**7.** The cellulose based tire cord according to Claim 6, wherein the swelling anisotropy is 1.1 to 1.3.

**8.** The cellulose based tire cord according to Claim 6, of which an initial modulus maintaining rate defined by the following Calculation Formula 5 is 80% or more:

### Calculation Formula 5

### Initial modulus maintaining rate (MC) = $M_{2C} / M_{1C} \times 100$

wherein

$M_{1C}$ is an initial modulus measured at 25 °C, 65%RH, and

$M_{2C}$ is an initial modulus measured at 25 °C, 95%RH.

**9.** The cellulose based tire cord according to Claim 6, wherein the initial modulus maintaining rate is 90% or more.

**10.** The cellulose based tire cord according to Claim 6, of which a strength maintaining rate defined by the following Calculation Formula 6 is 90% or more:

### Calculation Formula 6

### Strength maintaining rate (SC) = $S_{2C}/S_{1C} \times 100$

wherein

$S_{1C}$ is a strength measured at 25 °C, 65%RH, and

$S_{2C}$ is a strength measured at 25 °C, 95%RH.

**11.** The cellulose based tire cord according to Claim 6, wherein the cord includes lyocell filament fibers, rayon filament fibers, or a mixture thereof.

**Patentansprüche**

**1.** Lyocell-Filamentfasern deren Quellungsanisotropie, wie durch die folgende Berechnungsformel 1 definiert, 1,1 bis 1,4 beträgt:

### Berechnungsformel 1

### Quellungsanisotropie (KF) = $S_{dF}/S_{1F}$

worin bedeuten

$S_{dF}$ ein Durchmesser-Quellungsfaktor, definiert durch ein Verhältnis eines Faserdurchmessers bei 25°C, 95% RH, zu einem Faserdurchmesser bei 25°C, 65% RH, und

$S_{1F}$ ein Längen-Quellungsfaktor, definiert durch ein Verhältnis einer Faserlänge bei 25°C, 95% RH, zu einer Faserlänge bei 25°C, 65% RH.

**2.** Lyocell-Filamentfasern nach Anspruch 1, wobei die Quellungsanisotropie 1,1 bis 1,3 beträgt.

**3.** Lyocell-Filamentfasern nach Anspruch 1, deren Anfangsmodul-Beibehaltungsrate, definiert durch die folgende Berechnungsformel 2, 90% oder mehr beträgt:

Berechnungsformel 2

Anfangsmodul-Beibehaltungsrate (MF) = $M_{2F}/M_{1F}$ x 100

worin
$M_{1F}$ ein bei 25°C, 65% RH, gemessener Anfangsmodul ist, und
$M_{2F}$ ein bei 25°C, 95% RH, gemessener Anfangsmodul ist.

4. Lyocell-Filamentfasern nach Anspruch 1, deren Festigkeits-Beibehaltungsrate, definiert durch die folgende Berechnungsformel 3, 90% oder mehr beträgt:

Berechnungsformel 3

Festigkeits-Beibehaltungsrate (SF) = $S_{2F}/S_{1F}$ x 100

worin
$S_{1F}$ eine bei 25°C, 65% RH, gemessene Festigkeit ist, und
$S_{2F}$ eine bei 25°C, 95% RH, gemessene Festigkeit ist.

5. Reifenkord, beinhaltend die Lyocell-Filamentfasern gemäß mindestens einem der Ansprüche 1 bis 4.

6. Reifenkord auf Cellulosebasis, dessen Quellungsanisotropie, definiert durch die folgende Berechnungsformel 4, 1,1 bis 1,4 beträgt:

Berechnungsformel 4

Quellungsanisotropie (KC) = $S_{dC}/S_{lC}$

worin
$S_{dC}$ ein Durchmesser-Quellungsfaktor ist, definiert durch ein Verhältnis eines Faserdurchmessers bei 25°C, 95% RH, zu einem Faserdurchmesser bei 25°C, 65% RH, und
$S_{lC}$ ein Längen-Quellungsfaktor ist, definiert durch ein Verhältnis einer Faserlänge bei 25°C, 95% RH, zu einer Faserlänge bei 25°C, 65% RH.

7. Reifenkord auf Cellulosebasis nach Anspruch 6, wobei die Quellungsanisotropie 1,1 bis 1,3 beträgt.

8. Reifenkord auf Cellulosebasis nach Anspruch 6, dessen Anfangsmodul-Beibehaltungsrate, definiert durch die folgende Berechnungsformel 5, 80% oder mehr beträgt:

Berechnungsformel 5

Anfangsmodul-Beibehaltungsrate (MC) = $M_{2C}/M_{1C}$ x 100

worin
$M_{1C}$ ein bei 25°C, 65% RH, gemessener Anfangsmodul ist, und
$M_{2C}$ ein bei 25°C, 95% RH, gemessener Anfangsmodul ist.

9. Reifenkord auf Cellulosebasis nach Anspruch 6, wobei die Anfangsmodul-Beibehaltungsrate 90% oder mehr beträgt.

10. Reifenkord auf Cellulosebasis nach Anspruch 6, dessen Festigkeits-Beibehaltungsrate, definiert durch die folgende Berechnungsformel 6, 90% oder mehr beträgt:

Berechungsformel 6

Festigkeits-Beibehaltungsrate (SC) = $S_{2C}/S_{1C} \times 100$

worin
$S_{1C}$ eine bei 25°C, 65% RH, gemessene Festigkeit ist, und
$S_{2C}$ eine bei 25°C, 95% RH, gemessene Festigkeit ist.

**11.** Reifenkord auf Cellulosebasis nach Anspruch 6, wobei der Kord Lyocell-Filamentfasern, Rayon-Filamentfasern oder eine Mischung davon beinhaltet.


**Revendications**

**1.** Fibres filaments de fibres lyocell, dont une anisotropie de gonflement définie par la formule de calcul 1 suivante est de 1,1 à 1,4 :

Formule de calcul 1

Anisotropie de gonflement (KF) = $S_{dF}/S_{1F}$

dans laquelle
$S_{dF}$ est un facteur de gonflement du diamètre défini par un rapport d'un diamètre de fibre à 25°C, HR de 95 % sur un diamètre de fibres à 25°C, HR de 65 %, et
$S_{1F}$ est un facteur de gonflement de longueur défini par un rapport d'une longueur de fibre à 25 °C, HR de 95 % sur une longueur de fibres à 25°C, HR de 65 %.

**2.** Fibres filaments de fibres lyocell selon la revendication 1, dans lesquelles l'anisotropie de gonflement est de 1,1 à 1,3.

**3.** Fibres filaments de fibres lyocell selon la revendication 1, dont un taux de maintien du module initial défini par la formule de calcul 2 suivante est de 90 % ou plus :

Formule de calcul 2

Taux de maintien du module initial (MF) = $M_{2F}/M_{1F} \times 100$

dans laquelle
$M_{1F}$ est un module initial mesuré à 25°C, HR de 65 %, et
$M_{2F}$ est un module initial mesuré à 25°C, HR de 95 %.

**4.** Fibres filaments de fibres lyocell selon la revendication 1, dont un taux de maintien de la résistance défini par la formule de calcul 3 suivante est de 90 % ou plus :

Formule de calcul 3

Taux de maintien de la résistance (SF) = $S_{2F}/S_{1F} \times 100$

dans laquelle
$S_{1F}$ est une résistance mesurée à 25°C, HR de 65 % ; et
$S_{2F}$ est une résistance mesurée à 25°C, HR de 95 %.

**5.** Câble pour pneu comprenant les fibres filaments de fibres lyocell selon l'une quelconque des revendications 1 à 4.

**6.** Câble pour pneu à base de cellulose, dont une anisotropie de gonflement définie par la formule de calcul 4 suivante est de 1,1 à 1,4 :

Formule de calcul 4

Anisotropie de gonflement (KF) = $S_{dC}/S_{1C}$

dans laquelle

$S_{dC}$ est un facteur de gonflement du diamètre défini par un rapport d'un diamètre de fibre à 25°C, HR de 95 % sur un diamètre de fibres à 25°C, HR de 65 %, et $S_{1C}$ est un facteur de gonflement de longueur défini par un rapport d'une longueur de fibre à 25°C, HR de 95 % sur une longueur de fibres à 25°C, HR de 65 %.

**7.** Câble pour pneu à base de cellulose selon la revendication 6, dans lequel l'anisotropie de gonflement est de 1,1 à 1,3.

**8.** Câble pour pneu à base de cellulose selon la revendication 6, dont un taux de maintien du module initial défini par la formule de calcul 5 suivante est de 80 % ou plus :

Formule de calcul 5

Taux de maintien du module initial (MC) = $M_{2C}/M_{1C}$ x 100

dans laquelle

$M_{1C}$ est un module initial mesuré à 25°C, HR de 65 %, et
$M_{2C}$ est un module initial mesuré à 25°C, HR de 95 %.

**9.** Câble pour pneu à base de cellulose selon la revendication 6, dans lequel le taux de maintien du module initial est de 90 % ou plus.

**10.** Câble pour pneu à base de cellulose selon la revendication 6, dont un taux de maintien de la résistance défini par la formule de calcul 6 suivante est de 90 % ou plus :

Formule de calcul 6

Taux de maintien de la résistance (SC) = $S_{2C}/S_{1C}$ x 100

dans laquelle

$S_{1C}$ est une résistance mesurée à 25°C, HR de 65 % ; et $S_{2C}$ est une résistance mesuré à 25°C, HR de 95 %.

**11.** Câble pour pneu à base de cellulose selon la revendication 6, dans lequel le câble comprend des fibres filaments de fibres lyocell, des fibres filaments de rayonne, ou un mélange de celles-ci.

# FIG. 1

1. Tread
2. Shoulder
3. Side wall
4. Cap ply
5. Belt
6. Body ply
7. Inner liner
8. Apex
9. Bead

# FIG. 2

## FIG. 3

Coagulating bath

Collecting device

Water

60

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1500724 A1

- WO 0218682 A1

**Non-patent literature cited in the description**

- Structural characteristics of new and conventional regenerated cellulosic fibers. **Kreze T et al.** Textile Research Journal. Sage Publications, 01 August 2003, vol. 73, 675-684